Europäisches Patentamt

European Patent Office

Office européen des brevets

(19)

(11) Publication number: 0 249 580
A2

(12) **EUROPEAN PATENT APPLICATION**

(21) Application number: 87830197.7

(22) Date of filing: 26.05.87

(51) Int. Cl.⁴: **G 02 F 1/03**
**H 01 S 3/115**

(30) Priority: 28.05.86 IT 4807786

(43) Date of publication of application:
16.12.87 Bulletin 87/51

(84) Designated Contracting States: DE FR GB NL SE

(71) Applicant: SELENIA INDUSTRIE ELETTRONICHE
ASSOCIATE S.p.A.
Via Tiburtina, KM 12.400
I-00131 Roma (IT)

(72) Inventor: Giuliani, Giampiero
Via Padova, 65
I-00100 Roma (IT)

Marchetti, Renato
Via Oderisi da Gubbio, 181
I-00146 Roma (IT)

Palange, Elia
Via Colli della Serpentara, 15/11
I-00139 Roma (IT)

Penco, Eugenio
Via Bevignani, 12
I-00162 Roma (IT)

(74) Representative: Emiliani, Gabriele, Ing.
c/o ITALPATENT Via Agri, 3
I-00198 Roma (IT)

(54) **Electrooptical configuration for the generation of ultrashort laser pulses.**

(57) For them to generate ultra short laser pulses, cavity losses have to be modulated at extremely high speed. The configuration proposed provides such type of modulation, achieving phase and amplitude modulation through one single electrooptical crystal. By varying the parameters of the electrical pulses applied to such crystal Q switching cavity dumping and mode locking are achieved. The configuration is essentially made up of an electrooptical crystal (12), of a polarizer (8) and of at least two mirrors (10-12) which are totally reflective at both polarization states of the laser light. The invention fits the frame of laser sources capable of generating short duration pulses or pulse trains.

Fig. 1

Bundesdruckerei Berlin

**Description**

ELECTROOPTICAL CONFIGURATION FOR THE GENERATION OF ULTRASHORT LASER PULSES

The invention presented regards an electrooptical modulator for very short duration laser pulses generation in"Q switching"and Mode locking. The modulator uses a ring cavity within which a single electrooptical crystal caters for phase and/or amplitude modulation.

It fits the frame of laser sources capable of generation of pulses or pulse trains of very short duration (less than 1ns).

The problem which we now wish to solve through the invention presented, is that of achieving an optical configuration which gives way to a reliability improvement and to a lower cost of laser sources operating at ultra short pulses through the use of active modulation systems. Till now two or more cascaded modulators were used: electrooptical and/or acustooptical. It is a known fact that ultra short laser pulses may be generated reliably in terms of duration and peak power, only through active modulating systems of laser cavity losses. In particular, for high power lasers, the only system capable of effective modulation of the losses is the one utilising acustooptical modulators which due to their long switching times, cannot be used to obtain Q switching and cavity dumping operation, and furthermore such modulators cannot be used in pulsed lasers due to their relatively low modulation losses This invention applies to the adoption of a modulating system inserted within a ring optical configuration, in which a single electrooptical crystal can simultaneously provide acustooptical and electrooptical amplitude modulation, phase modulation Q switch and cavity dumping. The ring configuration covered by this invention, gives way to ultra short pulse trains, at any desired polarization state of the electromagnetic field or at polarizations mutually orthogonal when referred to two successive pulses.

The further advantage of this modulation system is shown by the short time duration of the laser pulse produced, and also by the equality of energy values extracted in simple Q switching and in mode locking Q switching.

Furthermore, by operating in cavity dumping, extraction efficiency is enhanced by factor seven.

The invention will now be described for illustrative and non limiting purposes, with reference, for build and operation, to the figures enclosed:

Figure 1 shows the laser cavity made up of the following;
6 active means
5 pump lamp
2 cavity terminal mirror
16 (dotted outline) electrooptical ring modulator where:
10-14 totally reflective mirrors
8 polarisel
12 electrooptical crystal
20 laser beam output

Figure 2 shows the electronic pulse circuit to be connected to terminals A and B of electrooptical crystal 12.

As mentioned above, the operation of the device presented with this invention will be described with reference to the figures above, bearing in mind that the description refers to a solution which is presently preferred by the inventor. Such solution however does not impede from implementing it in a different manner, still following the fundamental criteria of this invention.

The light beam coming from active means (6), strikes upon the polarizer, where it splits into two parts. The one delivered by the polarizer, following reflection by mirror(10) passes through crystal (12) where it changes phase and/or polarization, then, reflected by mirror (14), strikes once again polarizer (8) where it splits into two parts: one is transmitted and consists of the laser output, the other with orthogonal reflected polarization, consists of the cavity retroreflected part.

The ratio between retroreflected and output parts varies in time following the time variation of the voltage applied to the electrooptical crystal. The beam first reflected by the polarizer, runs through the ring in opposite direction with a behaviour which is similar to that of the one transmitted.

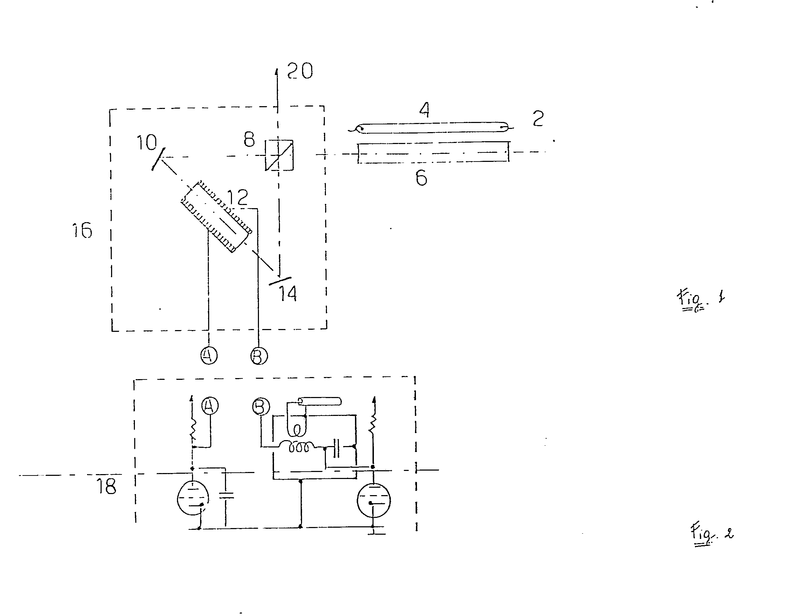

Figure 2 shows, within dotted lines, the electronic circuit which provides for the Q switch cavity dumping and mode locking operation. Sequential closing of TH, and $TH_2$ provides a square wave to crystal (12).

A RF generator, which supplies a sinus voltage to the same crystal (12) with period 4L/C (where L is the cavity optical length and C the speed of light), modulates the crystal electrooptical parameters so that the laser cavity operates in mode locking.

**Claims**

1. Electro optical configuration for the generation of ultra short laser pulses, characterized by the fact that it includes a polarizer 8, an electrooptical crystal 12 and two or more totally refective mirrors.

2. Electrooptical configuration, as per claim 1, in which the voltage applied to crystal (2), either direct or pulsed, is modulated at a frequency 4L/G where L is the laser resonator optical length inclusive of the optical ring modulator.

3. Electrooptical configuration, as per claims above, in which the voltage is applied to crystal (12) by means of an electronic circuit which gives way to Q switch, mode locking and cavity dumping of the laser radiation.

0249580

20

10 8

16 12

14

4 2

6

A B

18 A B

Fig. 1

Fig. 2